# EUROPEAN PATENT APPLICATION

(11) **EP 2 166 722 A1**
(43) Date of publication of application: **24.03.2010**
(21) Application number: 08305564.0
(22) Date of filing: 18.09.2008
(51) Int. Cl.: H04L 27/34

(54) **A hierarchical quadrature (QAM) transmission scheme**

(71) Applicant: Thomson Licensing, 92443 Issy-les-Moulineaux Cedex (FR)
(72) Inventor: Zhou, Wei, 100086, BEIJING (CN); Zou, Li, 100088, BEIJING (CN)
(74) Representative: Ruellan-Lemonnier, Brigitte

(57) **Abstract**

A cable transmitter transmits a hierarchically modulated signal having at least two layers and wherein one layer is associated with a non-uniform QAM (quadrature amplitude modulation) scheme for high priority streams; and the other layer is associated with a uniform QAM scheme for low priority streams.

## Description

### BACKGROUND OF THE INVENTION

The present invention generally relates to communications systems and, more particularly, to a communications systems having a plurality of code rates and modulation schemes.

Digital Video Broadcasting-Cable (DVB-C) is a first generation cable transmission system (e.g., see EN 300 429 V.1.2.1 (1998-04) Digital Video Broadcasting (DVB); Framing structure, channel coding and modulation for cable systems). However, migration to a second generation cable system, DVB-C2, is currently being studied for increasing transport capacity in order to offer new services such as high-definition television (HDTV), Video-on-Demand (VoD), and other advanced personalized and interactive services in the cable environment.

In this regards, hierarchical transmission is an attractive technology for a communications system, especially for broadcasting, since hierarchical transmission can provide flexible multi-program editing for different receiving conditions in a transmission channel. Hierarchical transmission has been adopted by Digital Video Broadcasting-Terrestrial (DVB-T) (e.g., see ETSI EN 300 744 V1.4.1 (2001-01) in Europe, and Integrated Services Digital Broadcasting-Terrestrial (ISDB-T) in Japan.

For example, in DVB-T, the system has different levels of Quadrature Amplitude Modulation (QAM) and different inner code rates for trading off bit rate versus ruggedness. However, the system also allows for two levels (or layers) of hierarchical channel coding and modulation, including uniform constellations and multi-resolution constellations. For example, a multi-resolution (MR) 64 symbol constellation comprises four "clouds", each cloud comprising a uniform 16-QAM constellation (or sub- constellation). The ratio of the distance between clouds and the distance between symbols within a cloud is representative of the desired degree of protection. Typically, the four clouds convey high priority information, while each sub constellation conveys low priority information. For example, two independent MPEG2 transport streams, referred to as the high-priority stream and the low-priority stream, are mapped onto the signal constellation by the Mapper and the Modulator which therefore has a corresponding number of inputs. The MPEG2 high priority stream is mapped to the 4 clouds, while the MPEG2 low priority stream is mapped to a sub- constellation. In either case, the receiver requires only one set of the inverse elements: an inner de-interleaver, an inner decoder, an outer de-interleaver, an outer decoder and multiplex adaptation.

Unfortunately, the price for this receiver economy is that reception can not switch from one layer to another (e.g., to select the more rugged layer in the event of reception becoming degraded) while continuously decoding and presenting pictures and sound. A pause is necessary while the inner decoder and the various source decoders are suitably reconfigured and reacquire lock.

In contrast, in ISDB-T, hierarchical transmission of ISDB-T is achieved by transmitting OFDM (Orthogonal Frequency Division Multiplexing) segment groups having different transmission parameters in a channel. A maximum of three layers can be transmitted in the channel at one time. Compared to DVB-T, the receiver of ISDB-T supports switching from one layer to another without a long time pause, but the performance gains between different layers is not very attractive.

### SUMMARY OF THE INVENTION

We have studied the hierarchical transmission environment, especially in a cable environment (e.g., an additive white Gaussian Noise (AWGN) channel), and find that increasing the performance gains between different layers is an important issue in hierarchical transmission. Indeed, any solution providing increased performance gains should also provide for flexible multi-program editing for different receiving conditions in the transmission channel and also provide a large increase in net payload capacity for Digital Television (DTV) transmission. Therefore, and in accordance with the principles of the invention, a hierarchical transmission system uses a non-uniform QAM symbol constellation for one layer and a uniform QAM symbol constellation for the other layer.

In an illustrative embodiment of the invention, a cable transmitter supports hierarchical transmission. In this regard, the cable transmitter supports a number of non-uniform (Gaussian-like) symbol constellations such as QPSK (quadrature phase-shift keying), 16-QAM, 32-QAM, 64-QAM, 128-QAM, 256-QAM, 512-QAM, 1024-QAM, etc.; and also supports a number of uniform symbol constellations such as QPSK, 16-QAM, 32-QAM, 64-QAM, 128-QAM, 256-QAM, 512 QAM, 1024-QAM, etc. Illustratively, the cable transmitter transmits a hierarchically modulated signal having at least two layers and wherein one layer is associated with a non-uniform QAM scheme for high priority streams (or data); and the other layer is associated with a uniform QAM scheme for low priority streams (or data). In accordance with the principles of the invention, the cable transmitter supports a number of LDPC (low density parity check) coding rates, e.g., 1/4, 1/3, 2/5, 1/2, 3/5, 2/3, 3/4, 4/5, 5/6, 8/9 and 9/10 and the inventive concept applies to a single carrier system as well as a multi-carrier system, e.g., an OFDM (Orthogonal Frequency Division Multiplexed) system.

In another illustrative embodiment of the invention, a cable receiver supports reception of a hierarchically modulated signal. In this regard, the cable receiver supports a number of non-uniform (Gaussian-like) symbol constellations such as QPSK, 16-QAM, 32-QAM, 64-QAM, 128-QAM, 256-QAM, 512-QAM, 1024-QAM, etc.; and also supports a number of uniform symbol constellations such as QPSK, 16-QAM, 32-QAM, 64-QAM, 128-QAM, 256-QAM, 512-QAM, 1024-QAM, etc. Illustratively, the cable receiver receives and demodulates a hierarchically modulated signal having at least two layers and wherein one layer is associated with a non-uniform QAM scheme for high priority streams (or data); and the other layer is associated with a uniform QAM scheme for low priority streams (or data). In accordance with the principles of the invention, the cable receiver supports a number of LDPC coding rates, e.g., 1/4, 1/3, 2/5, 1/2, 3/5, 2/3, 3/4, 4/5, 5/6, 8/9 and 9/10 and the inventive concept applies to a single carrier system as well as a multi-carrier system, e.g., an OFDM (Orthogonal Frequency Division Multiplexed) system.

In view of the above, and as will be apparent from reading the detailed description, other embodiments and features are also possible and fall within the principles of the invention.

### BRIEF DESCRIPTION OF THE DRAWINGS

FIG. 1 shows an illustrative embodiment of a transmitter embodying the principles of the invention;

FIG. 2 shows an illustrative flow chart in accordance with the principles of the invention for use in the transmitter or receiver of FIG. 1 ;

FIG. 3 illustrates Table One for a 32 non-uniform PAM symbol constellation;

FIG. 4 illustrates a non-uniform 1024-QAM symbol constellation using the values of Table One;

FIG. 5 illustrates Table Two for a 32 uniform PAM symbol constellation; and

FIG. 6 illustrates a uniform 1024-QAM symbol constellation using the values of Table Two;

FIG. 7 shows an illustrative embodiment of a receiver embodying the principles of the invention;

FIG. 8 shows an illustrative flow chart in accordance with the principles of the invention for use in the receiver of FIG. 7; and

FIG. 9 illustrates Table Three showing simulation results.

### DETAILED DESCRIPTION

Other than the inventive concept, the elements shown in the figures are well known and will not be described in detail. For example, other than the inventive concept, familiarity with Discrete Multitone (DMT) transmission (also referred to as Orthogonal Frequency Division Multiplexing (OFDM) or Coded Orthogonal Frequency Division Multiplexing (COFDM)) is assumed and not described herein. Also, familiarity with television broadcasting, receivers and video encoding is assumed and is not described in detail herein. For example, other than the inventive concept, familiarity with current and proposed recommendations for TV standards such as NTSC (National Television Systems Committee), PAL (Phase Alternation Lines), SECAM (SEquential Couleur Avec Memoire), ATSC (Advanced Television Systems Committee) (ATSC), Digital Video Broadcasting (DVB), Digital Video Broadcasting-Terrestrial (DVB-T) (e.g., see ETSI EN 300 744 V1.4.1 (2001-01), *Digital Video Broadcasting (DVB); Framing structure, channel coding and modulation for digital terrestrial television*; Digital Video Broadcasting-Cable (DVB-C) (e.g., see EN 300 429 V.1.2.1 (1998-04) *Digital Video Broadcasting (DVB); Framing structure, channel coding and modulation for cable systems*); Digital Video Broadcast-satellite (DVB-S2) system (e.g., see European Telecommunications Standards Institute (ETSI) Draft EN 302307, v.1.1.1, June 2004); Integrated Services Digital Broadcasting-Terrestrial (ISDB-T) in Japan and the Chinese Digital Television System (GB) 20600-2006 (Digital Multimedia Broadcasting - Terrestrial / Handheld (DMB-T/H)) is assumed. Likewise, other than the inventive concept, other transmission concepts such as eight-level vestigial sideband (8-VSB), Phase-Shift Keying (PSK), Quadrature Amplitude Modulation (QAM), and receiver components such as a radio-frequency (RF) front-end, or receiver section, such as a low noise block, tuners, and down converters; along with fast fourier transform (FFT) elements, spectrum shifters, channel state information (CSI) estimators, equalizers, demodulators, correlators, leak integrators and squarers is assumed. Further, other than the inventive concept, familiarity with processing signals, such as forming channel state information, is assumed and not described herein. Similarly, other than the inventive concept, formatting and encoding methods (such as Moving Picture Expert Group (MPEG)-2 Systems Standard (ISO/IEC 13818-1)) for generating transport bit streams are well-known and not described herein. It should also be noted that the inventive concept may be implemented using conventional programming techniques, which, as such, will not be described herein. In this regard, the embodiments described herein may be implemented in the analog or digital domains. Finally, like-numbers on the figures represent similar elements.

As noted earlier, increasing the performance gains between different layers is an important issue in hierarchical transmission. From information theory it is known that, in addition to coding gain, shaping gain can be obtained if the amplitude of the transmitter output follows a Gaussian distribution in an additive white Gaussian noise (AWGN) channel. There are two methods to get shaping gains.

One method is to use a uniform QAM constellation together with different probabilities for selecting each symbol (signal point) to provide shaping gain. This type of approach includes trellis shaping, the use of prefix codes, or a similar, subdivision of the signal constellation into variable-size regions. But this method needs one extra shaping code element in the transmitter design, which leads to some increase in transmitter complexity.

The second method is to use a non-uniform symbol constellation in order to obtain shaping gain, i.e., geometrical shaping. Here, each symbol of the constellation is assumed to be chosen with the same probability and the symbols are arranged in a way that a Gaussian distribution of the output signal at the transmitter results, e.g., more symbols are used at the lower power levels and less symbols are used at the higher power levels. This method does not require an extra shaping code element in the transmitter.

Unfortunately, one reason the above-noted standards use uniform symbol constellations is because of a number of disadvantages in using non-uniform symbol constellations. Firstly, shaping gains usually increase with the increase of the order of the QAM constellation, e.g., for 1024-QAM, the shaping gain is about 0.7 dB, for 256-QAM, the shaping gain is about 0.5 dB, but for low order QAM, the shaping gains are very little. So there is no significant gain in using a non-uniform symbol constellation in a low order QAM scheme such as QPSK, or 16-QAM. In addition, shaping gains usually decrease with an increase in code rate. In fact, for a very high code rate, the shaping gain may even become negative. Finally, another disadvantage is that a non-uniform symbol constellation is not good in a fading channel environment.

We have studied the hierarchical transmission environment, especially in a cable environment (e.g., an additive white Gaussian Noise (AWGN) channel), and find that increasing the performance gains between different layers is an important issue in hierarchical transmission. Indeed, any solution providing increased performance gains should also provide for flexible multi-program editing for different receiving conditions in the transmission channel and also provide a large increase in net payload capacity for Digital Television (DTV) transmission. Therefore, and in accordance with the principles of the invention, a hierarchical transmission system uses a non-uniform QAM symbol constellation for one layer and a uniform QAM symbol constellation for the other layer.

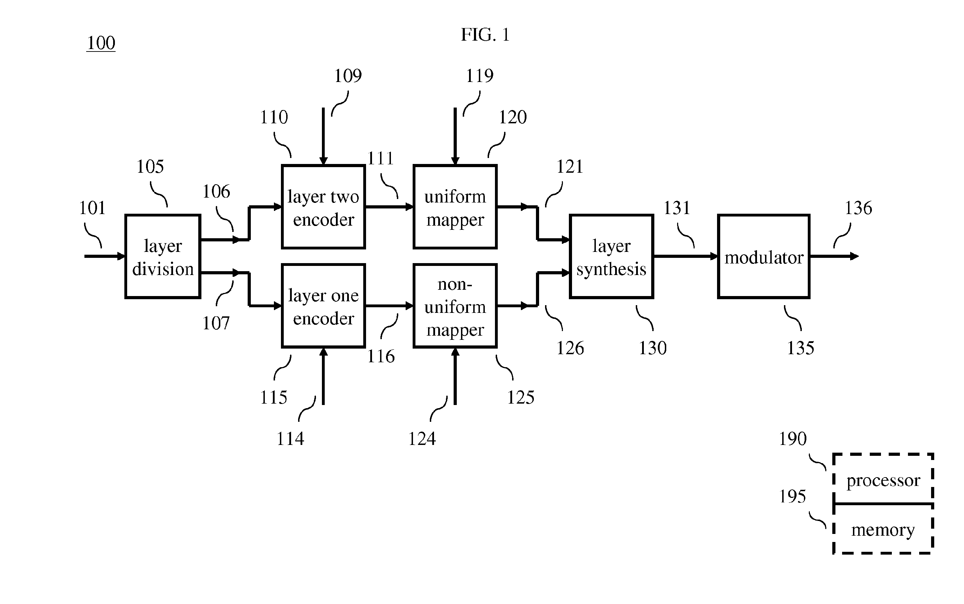

Referring now to FIG. 1, an illustrative transmitter 100 is shown in accordance with the principles of the invention. Only those portions relevant to the inventive concept are shown in transmitter 100. Illustratively, it is assumed that transmitter 100 is used in a cable DTV system. However, the inventive concept is not so limited and may be applicable to wired or wireless communications systems. Illustratively, transmitter 100 supports a number of LDPC coding rates, e.g., 1/4, 1/3, 2/5, 1/2, 3/5, 2/3, 3/4, 4/5, 5/6, 8/9 and 9/10. For example, and as known in the art, a coding rate of 2/5 means that for every two bits applied to an LDPC encoder, five output bits are generated by the LDPC encoder, e.g., three parity bits have been added. Further, as defined herein, a coding rate of 1/4 is the smallest coding rate and a coding rate of 9/10 is the highest coding rate. Thus, a coding rate of 1/2 is less than a coding rate of 5/6. These LDPC coding rates are described for example in the above-noted DVB-S2 system and now applied to a cable system. Transmitter 100 also supports a number of QAM schemes. In particular, transmitter 100 supports a number of non-uniform (Gaussian-like) *m*-QAM symbol constellations, where *m* is greater than one, such, e.g., QPSK (4-QAM), 16-QAM, 32-QAM, 64-QAM, 128-QAM, 256-QAM, 512-QAM, 1024-QAM, etc.; and also supports a number of uniform *m*-QAM symbol constellations, where *m* is greater than one, such as QPSK (4-QAM), 16-QAM, 32-QAM, 64-QAM, 128-QAM, 256-QAM, 512-QAM, 1024-QAM, etc. In accordance with the principles of the invention, transmitter 100 transmits a hierarchically modulated signal having at least two layers and wherein one layer is associated with a non-uniform QAM scheme for high priority streams (or data); and the other layer is associated with a uniform QAM scheme for low priority streams (or data).

Transmitter 100 comprises layer division element 105, layer two encoder 110, layer one encoder 115, uniform mapper 120, non-uniform mapper 125, layer synthesis element 130 and modulator 135. Transmitter 100 is a processor-based system and includes one, or more, processors and associated memory as represented by processor 190 and memory 195 shown in the form of dashed boxes in FIG. 1. In this context, computer programs, or software, are stored in memory 195 for execution by processor 190 and, e.g., implement layer two encoder 110. Processor 190 is representative of one, or more, stored-program control processors and these do not have to be dedicated to the transmitter function, e.g., processor 190 may also control other functions of transmitter 100. Memory 195 is representative of any storage device, e.g., random-access memory (RAM), read-only memory (ROM), etc.; may be internal and/or external to transmitter 100; and is volatile and/or non-volatile as necessary.

It should be noted that, other than the inventive concept, the illustrative system shown in FIG. 1 functions in accordance with DVB as defined in the above-noted standards and other DVB standards. For example, a DVB transmission system transmits frames of data. In this regard, a DVB transmission system uses *transmission parameter signaling* (TPS) so that a transmitter can provide signaling parameters, e.g., coding rate and modulation scheme, for each transmitted frame to a receiver (e.g., see ETSI EN 300 744 V1.5.1 (2004-11), Digital Video Broadcasting (DVB); Framing structure, channel coding and modulation for digital terrestrial television). For the purposes of this example, it is assumed that transmitter 100 uses TPS as defined in DVB for providing signaling parameters to a receiver 200 (described further below). The values specified in the TPS, e.g., coding rate and modulation scheme can change from frame to frame. In addition, and other than the inventive concept, how a coding rate is selected and how a symbol constellation size is selected are irrelevant to the inventive concept and performed in accordance with DVB.

As shown in FIG. 1, a transport stream of data as represented by input signal 101 is applied to layer division element 105. Illustratively, this transport stream is an MPEG2 transport stream. Layer division element 105 divides the transport stream of data into a high priority (e.g., more important) MPEG2 stream 107 and a low priority (e.g., less important) MPEG2 stream 106. It should be noted that the input transport stream of data may already be encoded with an "outer code". However, this is irrelevant to the principles of the invention. The high priority stream 107 is applied to layer one encoder 115. The layer one encoder 115 is representative of a number of processing elements that are not shown in the interests of simplifying the figure. In particular, layer one encoder 115 is representative of a data scrambler, BCH encoder, LDPC encoder and bit interleaver. The high priority stream 107 is first scrambled by a data scrambler (not shown) and the scrambled output signal is applied to a BCH encoder (not shown.) The resulting BCH encoded output is applied to an LDPC encoder (not shown). The LDPC encoder is set to one of the above-described coding rates via signal 114, which, e.g., is provided by processor 190. Illustratively, the high priority path uses low code rates, e.g., 1/2, 3/5, 2/3, 3/4 and 5/6. The resulting LDPC encoded output is then bit interleaved resulting in a layer one encoded output signal 116. In similar fashion, the low priority stream 106 is applied to layer two encoder 110. The layer two encoder 110 is also representative of a number of processing elements that are not shown in the interests of simplifying the figure. In particular, layer two encoder 110 is representative of a data scrambler, BCH encoder, LDPC encoder and bit interleaver. The low priority stream 106 is first scrambled by a data scrambler (not shown) and the scrambled output signal is applied to a BCH encoder (not shown.) The resulting BCH encoded output is applied to an LDPC encoder (not shown). The LDPC encoder is set to one of the above-described coding rates via signal 109, which, e.g., is provided by processor 190. Illustratively, the low priority path uses high code rates, e.g., 8/9 and 9/10. The resulting LDPC encoded output is then bit interleaved resulting in a layer two encoded output signal 111.

In accordance with the principles of the invention, the layer one encoded signal 116 is applied to non-uniform mapper 125; while the layer two encoded signal 111 is applied to uniform mapper 120. The particular *m-*QAM symbol constellation to use in non-uniform mapper 125 is set via signal 124, which, e.g., is provided by processor 190. Likewise, the particular *m-*QAM symbol constellation to use in uniform mapper 120 is set via signal 119, which, e.g., is provided by processor 190. Thus, and in accordance with the principles of the invention, in a hierarchical transmission system at least one layer uses a non-uniform symbol constellation and at least one layer uses a uniform symbol constellation.

Non-uniform mapper 125 provides a stream of symbols 126 and uniform mapper 120 provides a stream of symbols 121. Both of these symbol streams are combined (or synthesized) together by layer synthesis element 130 to provide a stream of symbols 131. For example, the in-phase and quadrature coordinates of respective symbols are added together to provide, in effect, a symbol in a combined signal space. The stream of symbols 131 representing the combined signal space is applied to modulator 135. The latter provides a hierarchically modulated signal 136 for transmission via an upconverter and antenna (both not shown in FIG. 1).

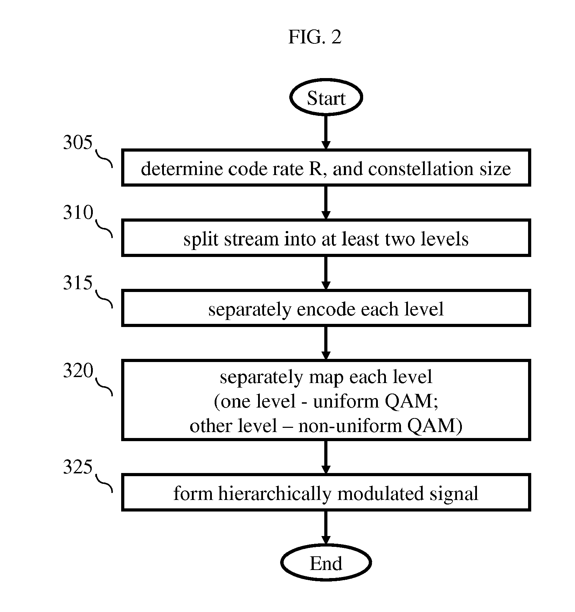

Referring now to FIG. 2, an illustrative flow chart in accordance with the principles of the invention for use in transmitter 100 is shown. In step 305, processor 190 determines (or selects) a coding rate and constellation sizes for use by transmitter 100 (e.g., via signals 109, 114, 119 and 124). In step 310, transmitter 100 splits the incoming transport stream into at least two levels, e.g., a first level and a second level. In step 315, transmitter 100 separately encodes each level. In step 320, and in accordance with the principles of the invention, transmitter 100 maps one encoded level, e.g., the first level, to a uniform symbol constellation and the other encoded level, e.g., the second level, to a non-uniform symbol constellation. In step 325, transmitter 100 forms the hierarchically modulated signal for transmission.

It should be noted that the various different symbol constellations used by uniform mapper 120 and non-uniform mapper 125 are stored in a memory, e.g., memory 195. Thus, and in accordance with the principles of the invention, transmitter 100 in effect adapts the symbol constellation. This adaptive constellation design is easy to implement and does not need significant additional cost, which can make all code rates achieve better performance over an AWGN channel. For a non-uniform symbol constellation, the coordinates of each constellation symbol are arranged in the way such that a Gaussian distribution of the output constellation signal at the transmitter results. For a uniform symbol constellation, the coordinates of each constellation symbol are arranged uniformly in the signal space.

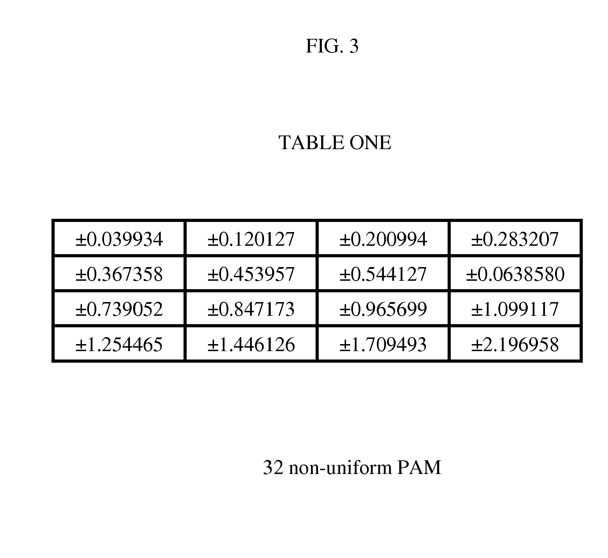

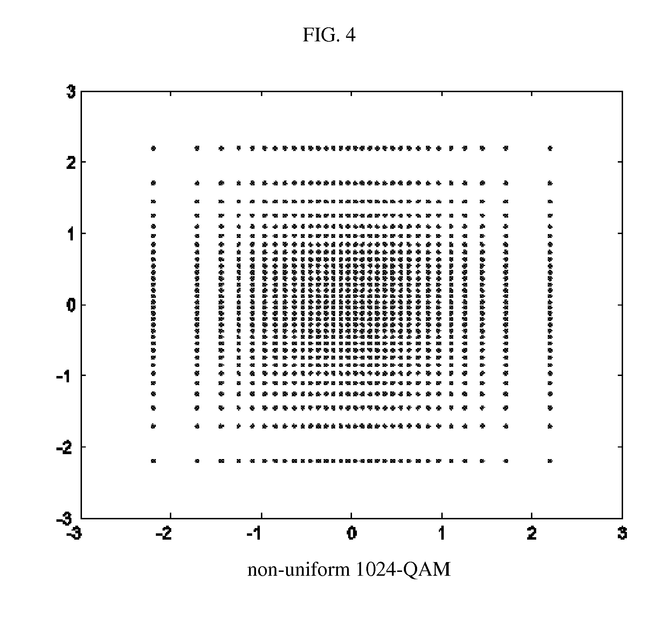

For example, as known in the art a 1024-QAM scheme can be represented as the intersecting points of two 32-PAM (Pulse Amplitude Modulation) constellations, one along the in-phase (I) axis and the other along the quadrature phase (Q) axis. Table One of FIG. 3 provides the normalized signal points for 32 symbols of a non-uniform PAM constellation (again, these points occur in both the I axis and the Q axis). It should be noted that Table One in effect contains 32 entries, via the use of the "±" sign. As such, Table One represents a non-uniform 1024-QAM constellation, which is illustratively shown in FIG. 4. As known in the art, a normalized symbol constellation just means the average energy of each symbol is 1. For purposes of comparing different symbol constellations, it is preferable to normalize the constellations. For example, consider a 4-PAM constellation having symbols located at the following coordinates along an axis: -3, -1, 1, 3. After normalization, the normalized constellation becomes: -1.3416, -0.4472, +0.4472, +1.3416, where the average energy of each symbol is normalized to 1 (e.g., see "Signal Shaping by QAM for AWGN Channels and Applications Using Turbo Coding", Dirk Sommer, Gerhard P. Fettweis. ITG Conference Source and Channel Coding, pages 81-86, January 2000). Other non-uniform QAM symbol constellations for other orders of m can be similarly constructed in a straightforward manner and are not described herein.

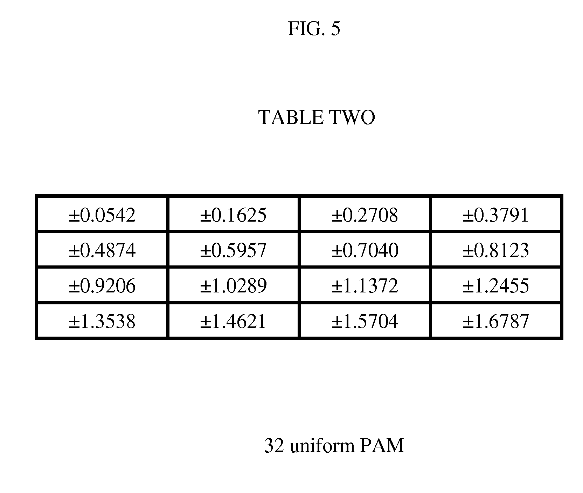

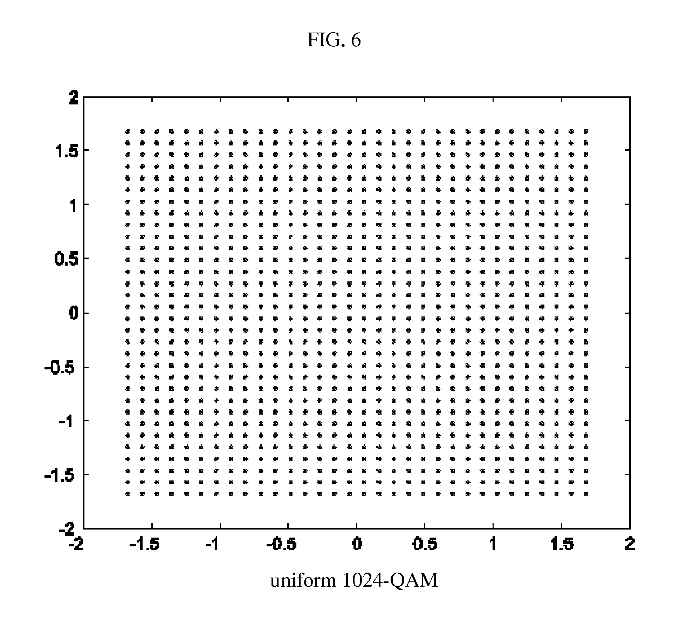

Likewise, Table Two of FIG. 5 provides the normalized signal points for 32 symbols of a uniform PAM constellation (again, these points occur in both the I axis and the Q axis). It should again be noted that Table Two in effect contains 32 entries, via the use of the "±" sign. As such, Table Two represents a uniform 1024-QAM constellation, which is illustratively shown in FIG. 6. Other uniform QAM symbol constellations for other orders of *m* can be similarly constructed in a straightforward manner and are not described herein.

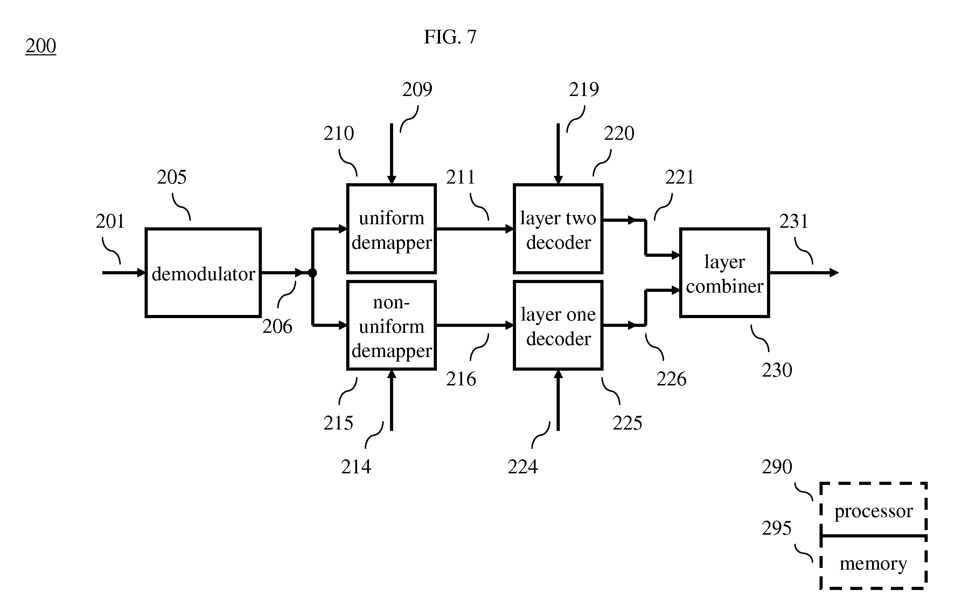

Turning now to FIG. 7, an illustrative receiver 200 for receiving a hierarchically modulated signal in accordance with the principles of the invention is shown. Only those portions relevant to the inventive concept are shown in receiver 200. In a complementary fashion to transmitter 100, receiver 200 supports the same number of LDPC coding rates, e.g., 1/4, 1/3, 2/5, 1/2, 3/5, 2/3, 3/4, 4/5, 5/6, 8/9 and 9/10; and the same number of *m-*QAM schemes, e.g., 4-QAM, 16-QAM, 64-QAM, 256-QAM, 1024-QAM, for recovering the original data. In accordance with the principles of the invention, a uniform *m*-QAM symbol constellation demapper is used for one layer of a received hierarchically modulated signal and a non-uniform *m*-QAM symbol demapper is used for the other layer of the received hierarchically modulated signal.

Receiver 200 comprises demodulator 205, uniform demapper 210, non-uniform demapper 215, layer two decoder 220, layer one decoder 225 and layer combiner element 230. Like transmitter 100, receiver 200 is also a processor-based system and includes one, or more, processors and associated memory as represented by processor 290 and memory 295 shown in the form of dashed boxes in FIG. 7. In this context, computer programs, or software, are stored in memory 295 for execution by processor 290 and, e.g., implement layer one decoder 225. Processor 290 is representative of one, or more, stored-program control processors and these do not have to be dedicated to the receiver function, e.g., processor 290 may also control other functions of receiver 200. Memory 295 is representative of any storage device, e.g., random-access memory (RAM), read-only memory (ROM), etc.; may be internal and/or external to receiver 200; and is volatile and/or non-volatile as necessary.

Receiver 200 performs in a complementary fashion to transmitter 100 and, as such, only an overview is provided. A received hierarchically modulated signal 201 is applied to demodulator 205, which provides a demodulated signal to uniform demapper 210 and non-uniform demapper 215. Receiver 200 determines the selected *m*-QAM scheme for the high priority layer and the low priority layer along with their associated code rates for a received frame via the above-noted TPS signaling. As such, layer one decoder 225 is set to the selected coding rate via signal 224, e.g., from processor 290; and non-uniform demapper 215 is set to the selected *m*-QAM modulation via signal 214, e.g., from processor 290. Likewise, layer two decoder 220 is set to the selected coding rate via signal 219, e.g., from processor 290; and non-uniform demapper 210 is set to the selected *m*-QAM modulation via signal 209, e.g., from processor 290. It should be noted that the various different symbol constellations used by uniform demapper 210 and non-uniform demapper 215 are stored in a memory, e.g., memory 295. For example, in the context of the above-described 1024-QAM symbol constellations, Table One of FIG. 3 and Table 4 of FIG. 5 are stored in memory 295. Uniform demapper 210 provides a sequence of symbols representing estimates of the received low priority symbols to layer two decoder 220, which provides a decoded low priority signal 221. Likewise, non-uniform demapper 215 provides a sequence of symbols representing estimates of the received high priority symbols to layer one decoder 225, which provides a decoded high priority signal 226. The decoded low priority signal 221 and the decoded high priority signal 226 are combined by layer combiner element 231 to provide a transport stream 231, which represents the received version of the transport stream of data as represented by input signal 101 in FIG. 1.

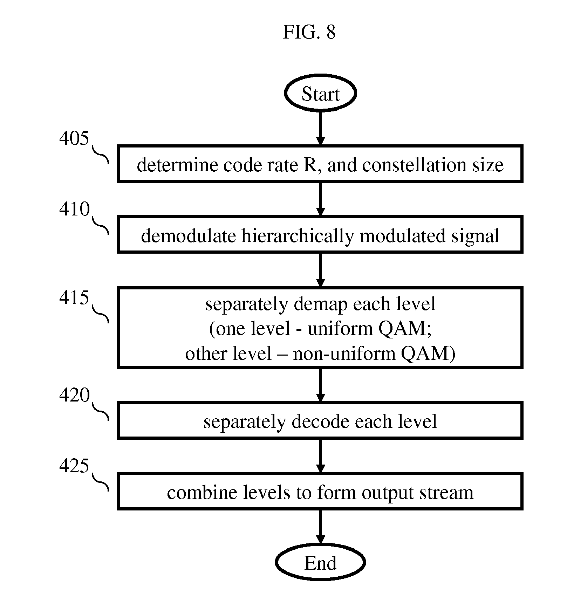

Turning now to FIG. 8, an illustrative flow chart in accordance with the principles of the invention for use in receiver 200 is shown. In step 405, receiver 200 determines the coding rate and constellation sizes for use by receiver 200 from the above-noted TPS signaling (e.g., via signals 209, 214, 219 and 224). In step 410, receiver 200 demodulates a received hierarchically modulated signal comprising at least two layers. In step 415, receiver 200 separately demaps the demodulated signal for one level using a non-uniform symbol constellation and demaps the other layer using a uniform symbol constellation. In step 420, receiver 200 separately decodes each layer. Finally, in step 425, receiver 200 combines the decoded layers to form an output stream.

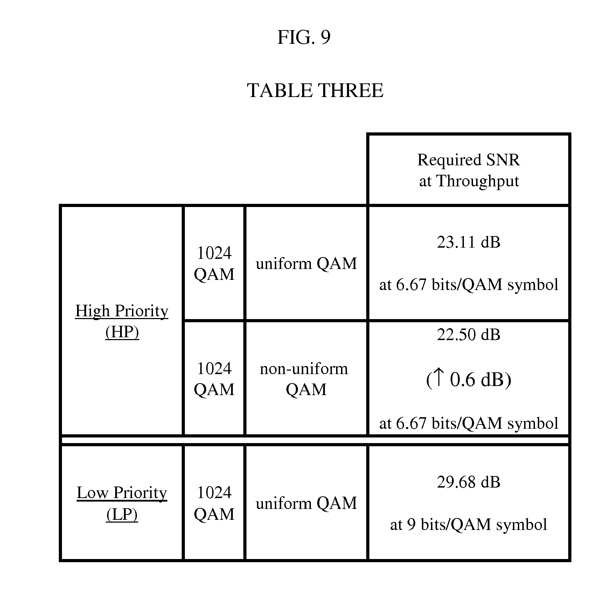

Illustrative simulation results are shown in Table Three of FIG. 9 for using a uniform 1024 QAM symbol constellation in the high priority layer versus a non-uniform 1024 QAM symbol constellation in accordance with the principles of the invention. In this regard, a uniform 1024 QAM constellation is used for the low priority layer. As can be observed from Table Three of FIG. 9, there is a 0.6dB improvement in performance if a non-uniform symbol constellation is used instead of using a uniform symbol constellation in both layers.

As described above, and in accordance with the principles of the invention, a hierarchical transmission system uses a non-uniform QAM symbol constellation for one layer and a uniform QAM symbol constellation for the other layer. It should be noted that although the inventive concept was illustrated in the context of a hierarchical transmitter using two layers, the inventive concept is not so limited and applies to any number of layers, e.g., three layers, etc. One example of a three layer system to which the inventive concept applies is the earlier-described ISDB-T system. In addition, although the inventive concept was illustrated in the context of a high priority stream using the non-uniform symbol constellation and a low priority stream using a uniform symbol constellation, the inventive concept is not so limited and, e.g., the high priority stream can be mapped to a uniform symbol constellation and the low priority stream can be mapped to a non-uniform symbol constellation. Also, it should be noted that for the high priority level, the code rate and the order of the QAM constellation (e.g., *m* = *4, 16, 64*, etc.) can be selected to attempt to maximize shaping gains and coding gains. Likewise, for the low priority stream the code rate and the order of the QAM constellation can be selected to maximize throughput which attempting to achieve good error performance. Although the inventive concept was described in the context of LDPC coding, the inventive concept is not so limited and is applicable to other channel coding schemes. Similarly, although described in the context of a cable system, the inventive concept is also applicable to other communications systems, whether they are AWGN-like or not. Further, although described in the context of a square constellation, the inventive concept is also applicable to other shapes in either the uniform mapper or the non-uniform mapper, e.g., a cross constellation.

In view of the above, the foregoing merely illustrates the principles of the invention and it will thus be appreciated that those skilled in the art will be able to devise numerous alternative arrangements which, although not explicitly described herein, embody the principles of the invention and are within its spirit and scope. For example, although illustrated in the context of separate functional elements, these functional elements may be embodied in one, or more, integrated circuits (ICs). Similarly, although shown as separate elements, any or all of the elements (e.g., of FIG. 1) may be implemented in a stored-program-controlled processor, e.g., a digital signal processor, which executes associated software. Further, the principles of the invention are applicable to other types of communications systems, e.g., satellite, Wireless-Fidelity (Wi-Fi), cellular, etc. Indeed, the inventive concept is also applicable to stationary or mobile receivers. It is therefore to be understood that numerous modifications may be made to the illustrative embodiments and that other arrangements may be devised without departing from the spirit and scope of the present invention as defined by the appended claims.

## Claims

1. A method comprising:
providing a first signal and a second signal;
mapping the first signal to a non-uniform quadrature amplitude modulated symbol constellation for providing a first sequence of symbols;
mapping the second signal to a uniform quadrature amplitude modulated symbol constellation for providing a second sequence of symbols; and
forming a hierarchically modulated signal comprising at least a first layer and a second layer, wherein the first layer is represented by the first sequence of symbols and the second layer is represented by the second sequence of symbols.

2. The method of claim 1, wherein the first layer is a high priority layer.

3. The method of claim 1, wherein the providing step includes:
receiving an input signal;
dividing the input signal into a high priority signal and a low priority signal;
coding the high priority signal for providing the first signal such that the coding step comprises at least one of BCH coding and low density parity check coding; and
coding the low priority signal for providing the second signal such that the coding step comprises at least one of BCH coding and low density parity check coding.

4. The method of claim 3, wherein the low density parity check coding rate is any one of 1/4, 1/3, 2/5, 1/2, 3/5, 2/3, 3/4, 4/5, 5/6, 8/9 and 9/10; and the uniform quadrature amplitude modulated symbol constellation uses any one of *m*-QAM modulations, where *m* is an integer greater than 1; and the non-uniform quadrature amplitude modulated symbol constellation uses any one of *m*-QAM modulations, where *m* is an integer greater than 1.

5. A method comprising:
demodulating a received hierarchically modulated signal having at least a first layer and a second layer;
demapping the first layer of the received hierarchically modulated signal using a non-uniform quadrature amplitude modulated symbol constellation for providing a first sequence of symbols;
demapping the second layer of the received hierarchically modulated signal using a uniform quadrature amplitude modulated symbol constellation for providing a second sequence of symbols;
decoding the first sequence of symbols for providing a first decoded signal; and
decoding the second sequence of symbols for providing a second decoded signal.

6. The method of claim 5, wherein the first layer is a high priority layer.

7. The method of claim 5, further comprising:
combining the first decoded signal and the second decoded signal for providing an output transport stream.

8. The method of claim 5, wherein each decoding step comprises at least one of BCH decoding and low density parity check decoding; and where the low density parity check coding rate is any one of 1/4, 1/3, 2/5, 1/2, 3/5, 2/3, 3/4, 4/5, 5/6, 8/9 and 9/10; and the uniform quadrature amplitude modulated symbol constellation uses any one of *m*-QAM modulations, where *m* is an integer greater than 1; and the non-uniform quadrature amplitude modulated symbol constellation uses any one of *m*-QAM modulations, where *m* is an integer greater than 1.

9. Apparatus comprising:
a first encoder for encoding a first signal and providing a first encoded signal;
a second encoder for encoding a second signal and providing a second encoded signal;
a first mapper for mapping the first encoded signal to a non-uniform quadrature amplitude modulated symbol constellation for providing a first sequence of symbols;
a second mapper for mapping the second encoded signal to a uniform quadrature amplitude modulated symbol constellation for providing a second sequence of symbols; and
a modulator for forming a hierarchically modulated signal comprising at least a first layer and a second layer, wherein the first layer is represented by the first sequence of symbols and the second layer is represented by the second sequence of symbols.

10. The apparatus of claim 9, wherein the first encoder comprises at least one of a BCH encoder and a low density parity check encoder; and wherein the second encoder comprises at least one of a BCH encoder and a low density parity check encoder; and wherein the low density parity check coding rate is any one of 1/4, 1/3, 2/5, 1/2, 3/5, 2/3, 3/4, 4/5, 5/6, 8/9 and 9/10; and the uniform quadrature amplitude modulated symbol constellation uses any one of *m*-QAM modulations, where m is an integer greater than 1; and the non-uniform quadrature amplitude modulated symbol constellation uses any one of *m*-QAM modulations, where m is an integer greater than 1.

11. Apparatus comprising:
a demodulator for demodulating a received hierarchically modulated signal having at least a first layer and a second layer;
a first demapper for demapping the first layer of the received hierarchically modulated signal using a non-uniform quadrature amplitude modulated symbol constellation for providing a first sequence of symbols;
a second demapper for demapping the second layer of the received hierarchically modulated signal using a uniform quadrature amplitude modulated symbol constellation for providing a second sequence of symbols;
a first decoder for decoding the first sequence of symbols for providing a first decoded signal; and
a second decoder for decoding the second sequence of symbols for providing a second decoded signal.

12. The apparatus of claim 11, wherein the first decoder comprises at least one of a BCH decoder and a low density parity check decoder; and wherein the second decoder comprises at least one of a BCH decoder and a low density parity check decoder; and wherein the low density parity check coding rate is any one of 1/4, 1/3, 2/5, 1/2, 3/5, 2/3, 3/4, 4/5, 5/6, 8/9 and 9/10; and the uniform quadrature amplitude modulated symbol constellation uses any one of *m*-QAM modulations, where *m* is an integer greater than 1; and the non-uniform quadrature amplitude modulated symbol constellation uses any one of *m*-QAM modulations, where *m* is an integer greater than 1.
